# EUROPÄISCHE PATENTSCHRIFT

(11) **EP 4 013 649 B1**
(45) Veröffentlichungstag und Bekanntmachung des Hinweises auf die Patenterteilung: **09.08.2023**
(21) Anmeldenummer: 20758130.7
(22) Anmeldetag: 11.08.2020
(51) Int. Cl.: B60R 21/201, B60R 21/232, B60R 21/237

(54) **GASSACKMODUL FÜR EIN KRAFTFAHRZEUG**
AIRBAG MODULE FOR A MOTOR VEHICLE
MODULE DE COUSSIN DE SÉCURITÉ GONFLABLE POUR UN VÉHICULE AUTOMOBILE

(30) Priorität: 14.08.2019 DE 202019104471 U
(43) Veröffentlichungstag der Anmeldung: 22.06.2022
(73) Patentinhaber: Dalphi Metal España, S.A., 36213 Vigo (ES); Safelife Industria de Componentes de Seguranca Automovel S.A., 4990-645 Gemieira (PT)
(72) Erfinder: VILAS, Ricardo, 4920-120 Vila Nova de Cerveira (PT)
(74) Vertreter: ZF Patentabteilung - DIPS
(86) Internationale Anmeldenummer: PCT/EP2020/072470
(87) Internationale Veröffentlichungsnummer: WO 2021/028424

(56) Entgegenhaltungen:
- EP-A1- 3 284 637
- WO-A1-2008/030683
- US-A1- 2005 104 335

## Beschreibung

Die Erfindung betrifft ein Gassackmodul für ein Kraftfahrzeug, insbesondere ein Vorhanggassackmodul, mit einem gefalteten, aufblasbaren Gassack, der an einem Gassackrand eine Montagelasche zur Befestigung des Gassacks am Kraftfahrzeug aufweist, und einer flexiblen Montagehülle, in welcher der gefaltete Gassack aufgenommen und fixiert ist, wobei die Montagehülle einen Schlitz aufweist, durch den sich die Montagelasche des Gassacks nach außerhalb der Montagehülle erstreckt.

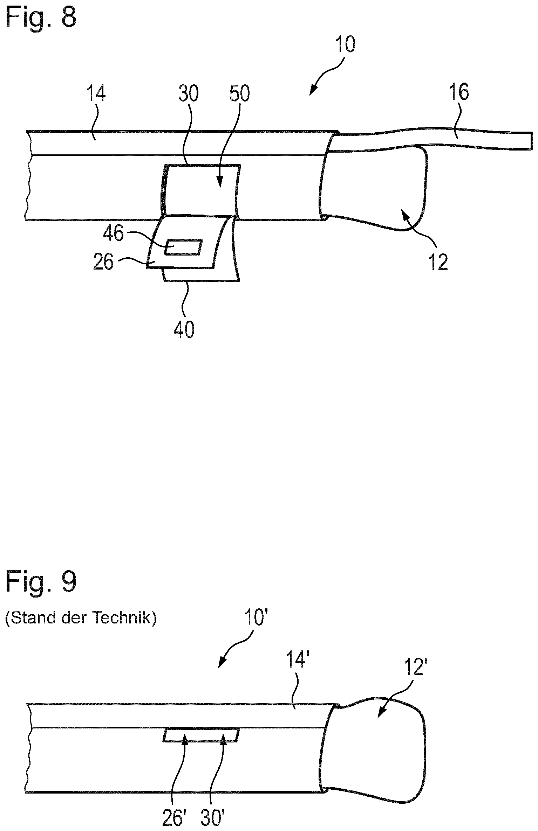

Vorhanggassäcke sind beispielsweise entlang einer Fahrzeugseite angeordnet und an einem Gassackrand mittels Montagelaschen an einem Dachrahmen des Kraftfahrzeugs befestigt. Zum Schutz, zur Fixierung und/oder zur Verbesserung der Gassackentfaltung sind die gefalteten und/oder gerollten Vorhanggassäcke häufig in einer schlauchförmigen Montagehülle aufgenommen. Wie in Figur 9 dargestellt, ist in der Montagehülle dann üblicherweise ein geradliniger Einschnitt, das heißt ein schmaler linearer Schlitz vorgesehen, durch den die Montagelasche nach außerhalb der Montagehülle gezogen wird, um die Montagelasche am Dachrahmen befestigen zu können.

Beim Zusammenbau des Gassackmoduls bedarf es allerdings einiger Fingerfertigkeit, die Montagelasche durch den schmalen Schlitz zu fassen zu bekommen und nach außerhalb der Montagehülle zu ziehen. Diese Tätigkeit ist zum einen zeitaufwendig und zum anderen für eine Montageperson auf Dauer anstrengend und frustrierend.

Ein solches Gassackmodul mit den Merkmalen im Oberbegriff des Anspruchs 1 ist beispielsweise in den Druckschriften WO 2008/030683 A1, EP 3 284 637 A1 und US 2005/0104335 A1 beschrieben, wobei Montagelaschen eines Vorhanggassacks jeweils durch einen Schlitz in der Montagehülle gefädelt werden, um dann an einer Trägerstruktur des Fahrzeugs befestigt, insbesondere verschraubt zu werden. Die EP 3 284 637 A1 zeigt ferner unterschiedliche geometrische Ausgestaltungen des Schlitzes in der Montagehülle, während die US 2005/0104335 A1 eine Montagehülle offenbart, die beabstandet von den Schlitzen zusätzliche Laschen aufweisen kann, um die Montagehülle an der Trägerstruktur zu fixieren.

Aufgabe der Erfindung ist die Schaffung eines Gassackmoduls, das bei gleicher Funktionalität einen besonders einfachen und schnellen Zusammenbau ermöglicht.

Diese Aufgabe wird erfindungsgemäß gelöst durch ein Gassackmodul mit den Merkmalen des Anspruchs 1, wobei der Schlitz gekrümmt ausgeführt ist und/oder wenigstens zwei zueinander geneigte, lineare Schlitzabschnitte aufweist, welche ineinander übergehen. Der Schlitz in der flexiblen Montagehülle lässt sich dadurch problemlos zu einer größeren, flächigen Hüllenöffnung aufweiten, sodass das Durchführen der Montagelasche erleichtert wird.

Erfindungsgemäß ist die flexible Montagehülle ein entlang einer Längsachse langgestreckter Montageschlauch mit einer in Umfangsrichtung verlaufenden Umfangswand, wobei der Schlitz wenigstens eine Hüllenlasche definiert, die klappbar, insbesondere in radialer Richtung nach außen klappbar ist. Durch die aus der speziellen Schlitzgeometrie resultierende, klappbare Hüllenlasche ergibt sich eine relativ große, flächige Hüllenöffnung, welche das Durchführen der Montagelasche nach außerhalb der Montagehülle deutlich vereinfacht.

In einem am Kraftfahrzeug montierten Zustand des Gassackmoduls erstreckt sich die Hüllenlasche der Montagehülle bevorzugt im Wesentlichen parallel zur Montagelasche des Gassacks.

Beispielsweise kann die Hüllenlasche der Montagehülle in dem am Kraftfahrzeug montierten Zustand des Gassackmoduls mit der Montagelasche des Gassacks in Kontakt sein und insbesondere flächig an der Montagelasche des Gassacks anliegen. Durch die Anlage der beiden Laschen nimmt die schlauchförmig ausgebildete Montagehülle in Umfangsrichtung eine definierte Relativposition zum gefalteten Gassack ein. Somit ist eine unerwünschte Verdrehung der Montagehülle relativ zum gefalteten Gassackpaket weitgehend ausgeschlossen.

Erfindungsgemäß weist das Gassackmodul ferner ein Verbindungsmittel zur Befestigung des Gassacks am Kraftfahrzeug auf, wobei sich das Verbindungsmittel sowohl durch eine Öffnung in der Hüllenlasche als auch durch eine Öffnung in der Montagelasche erstreckt. Danach lässt sich das Verbindungsmittel in eine Befestigungsöffnung eines Trägerelements des Kraftfahrzeugs einführen, um das Gassackmodul am Kraftfahrzeug zu fixieren. Bei der Befestigung des Gassackmoduls am Fahrzeug werden folglich die Montagehülle und das gefaltete Gassackpaket in Umfangsrichtung automatisch in die gewünschte, definierte Relativposition bewegt.

Um eine besonders schnelle Montage des Gassackmoduls am Fahrzeug zu realisieren ist das Verbindungsmittel vorzugsweise ein Rastclip. Alternativ ist jedoch beispielsweise auch eine Verschraubung denkbar.

Gemäß einer weiteren Ausführungsform des Gassackmoduls ist der Schlitz U-förmig oder V-förmig ausgebildet. Dadurch entsteht in vorteilhafter Weise eine einzige, relativ große klappbare Hüllenlasche, welche besonders einfach mit einer Öffnung versehen und zusammen mit der Montagelasche am Kraftfahrzeug befestigt werden kann. Alternativ sind natürlich auch H-förmige oder X-förmige Schlitze denkbar, wobei in diesen Fällen dann mehrere kleine klappbare Hüllenlaschen entstehen. Das Einbringen einer Öffnung in eine kleine Hüllenlasche ist aufgrund der erhöhten Ausreißgefahr allerdings schwieriger und auch das Einfädeln des Verbindungsmittels in die Öffnung ist bei kleinen, kurzen Hüllenlaschen etwas erschwert.

Die Montagehülle des Gassackmoduls kann aus einem reißbaren Material hergestellt sein und/oder Sollbruchstellen aufweisen, sodass die Montagehülle eine Montagefixierung für den gefalteten Gassack bereitstellt und bei einer Entfaltung des Gassacks aufreißt. Konkret ist die Montagehülle beispielsweise aus einem Gewebe oder einer Kunststofffolie hergestellt.

Der Gassack des Gassackmoduls ist vorzugsweise ein Vorhanggassack, insbesondere ein Vorhang-Seitengassack. Derartige Vorhang-Seitengassäcke erstrecken sich oftmals über die gesamte Länge des Fahrzeugs und weisen daher viele Montagelaschen zur Befestigung des Gassacks am Kraftfahrzeug auf. Folglich wirkt sich die oben beschriebene, vorteilhafte Konstruktion der Montagehülle hier besonders vorteilhaft auf den Zusammenbau des Gassackmoduls aus.

Weitere Merkmale und Vorteile der Erfindung ergeben sich aus der nachfolgenden Beschreibung bevorzugter Ausführungsformen unter Bezugnahme auf die Zeichnungen. In diesen zeigt:
- Figur 1 eine schematische Schnittansicht eines Gassackmoduls mit einem Gassack in seinem gefalteten Zustand;
- Figur 2 eine schematische Schnittansicht des Gassackmoduls gemäß Figur 1 mit dem Gassack in seinem entfalteten, aufgeblasenen Zustand;
- Figur 3 einen Detailausschnitt des Gassackmoduls gemäß Figur 1 im Bereich einer Montagelasche des Gassacks;
- Figur 4 einen schematischen Schnitt IV-IV durch das Gassackmodul gemäß Figur 3;
- Figur 5 einen weiteren schematischen Schnitt IV-IV durch das Gassackmodul gemäß Figur 3;
- Figur 6 eine Detailansicht einer Montagehülle des Gassackmoduls gemäß Figur 1 im Bereich einer Hüllenlasche;
- Figur 7 verschiedene Schlitzvarianten a) - d) zur Erzeugung einer Hüllenlasche in der Montagehülle eines erfindungsgemäßen Gassackmoduls;
- Figur 8 eine Ansicht des Gassackmoduls gemäß Figur 1 an einem axialen Modulende; und
- Figur 9 eine Ansicht eines herkömmlichen Gassackmoduls gemäß dem Stand der Technik an einem axialen Modulende.

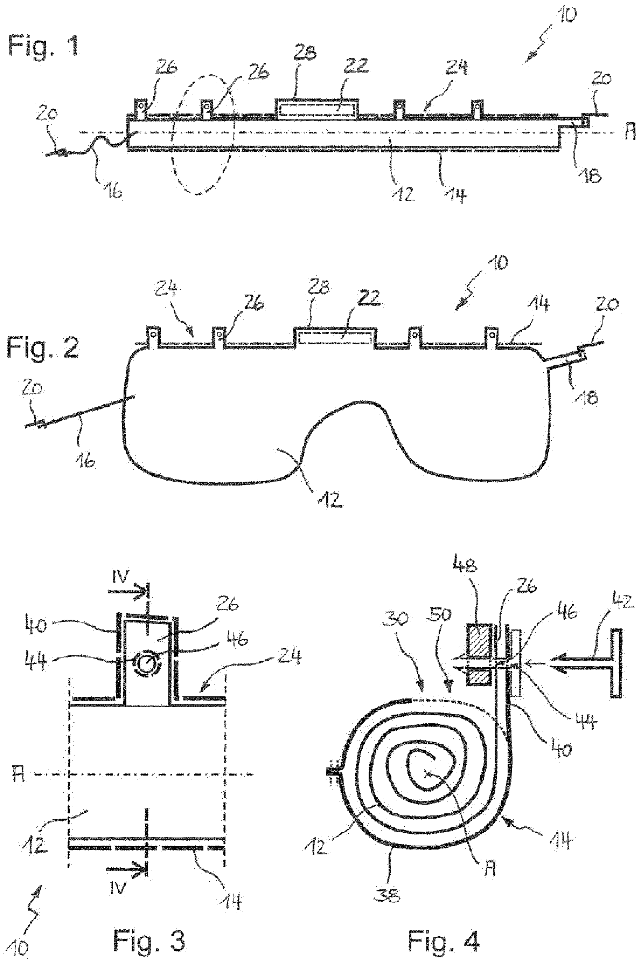

Die Figur 1 zeigt schematisch ein Gassackmodul 10 für ein Kraftfahrzeug, mit einem gefalteten, aufblasbaren Gassack 12 und einer flexiblen Montagehülle 14, in welcher der gefaltete Gassack 12 aufgenommen und fixiert ist. Die Montagehülle 14 ist in der dargestellten Ausführungsform aus einem reißbaren Material gefertigt und/oder weist Sollbruchstellen auf, sodass sie eine Montagefixierung bereitstellt sowie bei einer Entfaltung des Gassacks 12 aufreißt.

Ferner umfasst das Gassackmodul 10 langgestreckte, flexible Haltebänder 16, 18 zur Positionierung des Gassacks 12 in seinem entfalteten, aufgeblasenen Zustand (Figur 2), welche sich jeweils von einem am Gassack 12 befestigten Bandende zu einem entgegengesetzten Bandende erstrecken, an dem ein Befestigungsteil 20 angebracht ist. Mit diesen hakenförmigen Befestigungsteilen 20 werden die Bandenden der Haltebänder 16, 18 beispielsweise an einer A-Säule bzw. einer C-Säule des Kraftfahrzeugs fixiert.

Die Figur 2 zeigt das Gassackmodul 10 gemäß Figur 1 nach der Auslösung eines gestrichelt angedeuteten Gasgenerators 22 in einem entfalteten, aufgeblasenen Zustand des Gassacks 12.

Der Gassack 12 weist gemäß den Figuren 1 und 2 an seinem oberen Gassackrand 24 Montagelaschen 26 zur Befestigung am Kraftfahrzeug, insbesondere an einem Dachrahmen des Kraftfahrzeugs auf. Ferner ist am oberen Gassackrand 24 eine Aufnahmetasche 28 für den Gasgenerator 22 vorgesehen, wobei der Gasgenerator 22 vorzugsweise ebenfalls am Dachrahmen des Kraftfahrzeugs befestigt ist. Bei dem dargestellten Gassack 12 handelt es sich folglich um einen Vorhanggassack, konkret um einen Vorhang-Seitengassack für ein Kraftfahrzeug.

Die Figuren 3 bis 5 zeigen schematische Details des Gassackmoduls 10 gemäß Figur 1 im Bereich einer Montagelasche 26 des Gassacks 12.

Die Montagehülle 14 weist in diesem Bereich einen Schlitz 30 auf, durch den sich die Montagelasche 26 des Gassacks 12 nach außerhalb der Montagehülle 14 erstreckt. Dabei ist der Schlitz 30 gekrümmt ausgeführt und/oder weist wenigstens zwei zueinander geneigte, lineare Schlitzabschnitte 32, 34, 36 auf, die ineinander übergehen.

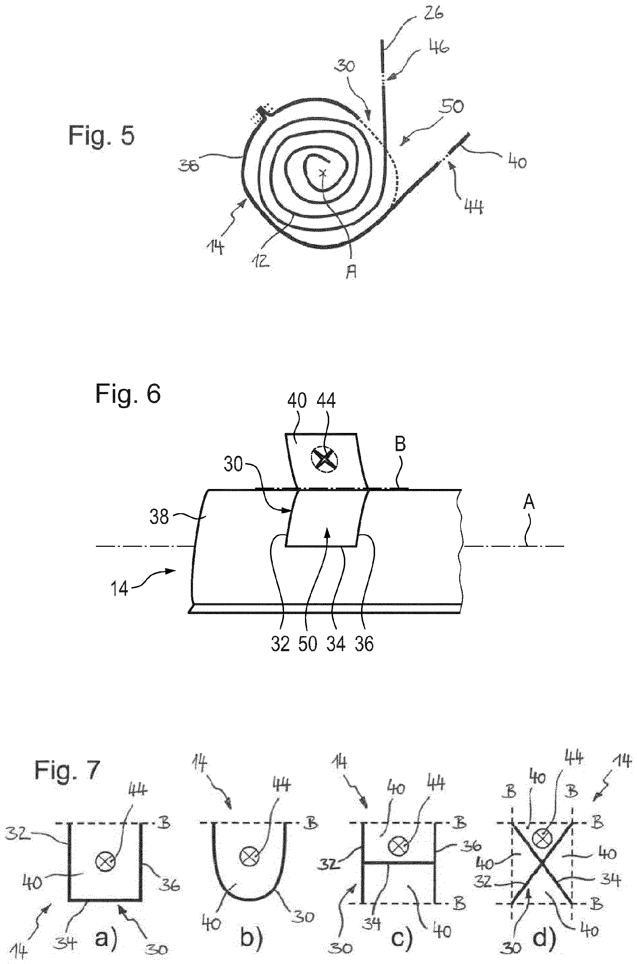

Hierzu zeigt die Figur 6 die Montagehülle 14 im Bereich eines solchen Schlitzes 30, und in Figur 7 sind beispielhaft unterschiedliche Schlitzgeometrien dargestellt.

Anhand der Figuren wird deutlich, dass die flexible Montagehülle 14 ein entlang einer Längsachse A langgestreckter Montageschlauch mit einer in Umfangsrichtung verlaufenden Umfangswand 38 ist, wobei der Schlitz 30 wenigstens eine Hüllenlasche 40 definiert, die in radialer Richtung klappbar ist. Der Schlitz 30 bzw. dessen Schlitzabschnitte 32, 34, 36 werden zum Beispiel durch Stanzen oder Einschneiden der Umfangswand 38 in die Montagehülle 14 eingebracht.

Wie in Figur 4 angedeutet, erstreckt sich die Hüllenlasche 40 der Montagehülle 14 in einem am Kraftfahrzeug montierten Zustand des Gassackmoduls 10 im Wesentlichen parallel zur Montagelasche 26 des Gassacks 12. Die Hüllenlasche 40 ist dabei mit der Montagelasche 26 des Gassacks 12 in Kontakt und liegt insbesondere flächig an der Montagelasche 26 des Gassacks 12 an.

Zur Befestigung des Gassacks 12 am Kraftfahrzeug ist ein Verbindungsmittel 42 vorgesehen, welches sich sowohl durch eine Öffnung 44 in der Hüllenlasche 40 als auch durch eine Öffnung 46 in der Montagelasche 26 erstreckt und schließlich in einem Trägerelement 48, beispielsweise in einem Dachrahmen des Kraftfahrzeugs, verankert werden kann.

Das Verbindungsmittel 42 ist im vorliegenden Ausführungsbeispiel ein Rastclip, der eine besonders schnelle Montage des Gassackmoduls 10 am Kraftfahrzeug ermöglicht. Selbstverständlich kann das Verbindungsmittel 42 alternativ auch eine Schraube oder ein sonstiges geeignetes Verankerungselement sein.

Die Montagehülle 14 gemäß Figur 6 weist eine U-förmige Schlitzgeometrie auf, die aus drei linearen, d.h. geradlinigen Schlitzabschnitten 32, 34, 36 zusammengesetzt ist. Im dargestellten Ausführungsbeispiel gehen aneinandergrenzende Schlitzabschnitte 32, 34, 36 ineinander über und sind jeweils unter einem Winkel von etwa 90° zueinander geneigt, sodass eine im Wesentlichen rechteckige Hüllenlasche 40 entsteht, welche um eine Achse B verschwenkt werden kann. Gemäß Figur 6 ist die Hüllenlasche 40 radial nach außen geklappt.

Aufgrund der speziellen Schlitzgeometrie sowie insbesondere der klappbaren Hüllenlasche 40 lässt sich der Schlitz 30 in der flexiblen Montagehülle 14 problemlos zu einer vergleichsweise großen, flächigen Hüllenöffnung 50 aufweiten, sodass das Durchführen der Montagelasche 26 erheblich vereinfacht wird.

Die im Wesentlichen rechteckige, große Hüllenöffnung 50 ermöglicht bezüglich der Längsachse A eine Relativdrehung zwischen dem gefalteten Gassackpaket und der Montagehülle 14, sodass sich gemäß Figur 5 theoretisch eine unerwünschte Position der Montagehülle 14 relativ zum gefalteten Gassack 12 einstellen kann. Spätestens bei der Montage des Gassackmoduls 10 am Kraftfahrzeug, konkret beim Einstecken des Verbindungsmittels 42 in die Öffnung 44 der Hüllenlasche 40 und die Öffnung 46 der Montagelasche 26 wird jedoch die Montagehülle 14 in Umfangsrichtung korrekt zum gefalteten Gassackpaket ausgerichtet.

In den Figuren 7a bis 7d sind verschiedene Schlitzgeometrien dargestellt, welche zu unterschiedlich geformten Hüllenlaschen 40 in der Montagehülle 14 führen.

Die Figur 7a zeigt nochmals die Ausführung gemäß Figur 6, bei welcher drei lineare Schlitzabschnitte 32, 34, 36 einen U-förmigen Schlitz 30 bilden. Die resultierende, rechteckige Hüllenlasche 40 mit der Öffnung 44 für das Verbindungsmittel 42 lässt sich in diesem Fall um die gestrichelt angedeutete Achse B klappen.

Alternativ kann der Schlitz 30 auch V-förmig ausgeführt sein, woraus eine im Wesentlichen dreieckige Hüllenlasche 40 resultiert.

Die Figur 7b zeigt eine Ausführungsvariante mit einem ebenfalls U-förmigen Schlitz 30, wobei der Schlitz 30 hier allerdings nicht aus linearen Schlitzabschnitten 32, 34, 36 zusammengesetzt, sondern gekrümmt ausgeführt ist.

Schließlich sind in den Figuren 7c und 7d noch Varianten der Montagehülle 14 dargestellt, bei denen der Schlitz 30 aus linearen Schlitzabschnitten 32, 34, 36 zusammengesetzt und insgesamt H-förmig bzw. X-förmig ausgeführt ist.

Auf diese Weise entstehen mehrere kleine klappbare Hüllenlaschen 40, die jeweils um eine zugeordnete Achse B verschwenkt werden können. Vorzugsweise ist auch in diesen Ausführungsvarianten in einer der Hüllenlasche 40 jeweils eine Öffnung 44 vorgesehen, um die Montagehülle 14 bei der Befestigung des Gassacks 12 am Kraftfahrzeug in Umfangsrichtung relativ zum gefalteten Gassack 12 auszurichten. Das Einbringen der Öffnung 44 in eine der kleinen Hüllenlaschen 40 ist allerdings aufgrund der erhöhten Ausreißgefahr etwas schwieriger und auch das Einfädeln des Verbindungsmittels 42 ist bei einer kleinen, kurzen Hüllenlasche 40 etwas erschwert. Folglich werden die Ausführungsformen gemäß den Figuren 7a und 7b als besonders vorteilhaft angesehen.

Die Figur 8 zeigt eine Ansicht des zusammengebauten Gassackmoduls 10 gemäß Figur 1 an einem axialen Modulende, wobei in der Montagehülle 14 ein U-förmiger Schlitz 30 vorgesehen ist, sodass eine Montagelasche 26 zur Befestigung des Gassacks 12 am Kraftfahrzeug durch die große rechteckige Hüllenöffnung 50 schnell und einfach durch die Montagehülle 14 nach außen geführt werden kann.

Demgegenüber ist in Figur 9 eine Ansicht eines herkömmlichen Gassackmoduls 10' gemäß dem Stand der Technik an einem axialen Modulende dargestellt, wobei in der Montagehülle 14' lediglich ein schmaler, linearer Schlitz 30' vorgesehen ist. In diesem Fall ist es für eine Montageperson deutlich schwieriger, die Montagelasche 26' des Gassacks 12' durch den schmalen linearen Schlitz 30' zu fassen zu bekommen und nach außerhalb der Montagehülle 14' zu ziehen.

## Patentansprüche

1. Gassackmodul für ein Kraftfahrzeug, mit
einem gefalteten, aufblasbaren Gassack (12), der an einem Gassackrand (24) eine Montagelasche (26) zur Befestigung des Gassacks (12) am Kraftfahrzeug aufweist, und
einer flexiblen Montagehülle (14), in welcher der gefaltete Gassack (12) aufgenommen und fixiert ist,
wobei die Montagehülle (14) ein entlang einer Längsachse (A) langgestreckter Montageschlauch mit einer in Umfangsrichtung verlaufenden Umfangswand (38) ist und einen Schlitz (30) aufweist, durch den sich die Montagelasche (26) des Gassacks (12) nach außerhalb der Montagehülle (14) erstreckt,
**dadurch gekennzeichnet, dass** der Schlitz (30) wenigstens eine Hüllenlasche (40) definiert, die in radialer Richtung klappbar ist, wobei der Schlitz (30) gekrümmt ausgeführt ist und/oder wenigstens zwei zueinander geneigte, lineare Schlitzabschnitte (32, 34, 36) aufweist, die ineinander übergehen, und
wobei ein Verbindungsmittel (42) zur Befestigung des Gassacks (12) am Kraftfahrzeug vorgesehen ist, wobei sich das Verbindungsmittel (42) sowohl durch eine Öffnung (44) in der Hüllenlasche (40) als auch durch eine Öffnung (46) in der Montagelasche (26) erstreckt.

2. Gassackmodul nach Anspruch 1, **dadurch gekennzeichnet, dass** sich die Hüllenlasche (40) der Montagehülle (14) in einem am Kraftfahrzeug montierten Zustand des Gassackmoduls (10) im Wesentlichen parallel zur Montagelasche (26) des Gassacks (12) erstreckt.

3. Gassackmodul nach Anspruch 1 oder 2, **dadurch gekennzeichnet, dass** die Hüllenlasche (40) der Montagehülle (14) in einem am Kraftfahrzeug montierten Zustand des Gassackmoduls (10) mit der Montagelasche (26) des Gassacks (12) in Kontakt ist, insbesondere flächig an der Montagelasche (26) des Gassacks (12) anliegt.

4. Gassackmodul nach einem der vorhergehenden Ansprüche, **dadurch gekennzeichnet, dass** das Verbindungsmittel (42) ein Rastclip ist.

5. Gassackmodul nach einem der vorhergehenden Ansprüche, **dadurch gekennzeichnet, dass** der Schlitz (30) U-förmig oder V-förmig ausgebildet ist.

6. Gassackmodul nach einem der vorhergehenden Ansprüche, **dadurch gekennzeichnet, dass** die Montagehülle (14) aus einem reißbaren Material hergestellt ist und/oder Sollbruchstellen aufweist, sodass die Montagehülle (14) eine Montagefixierung bereitstellt und bei einer Entfaltung des Gassacks (12) aufreißt.

7. Gassackmodul nach einem der vorhergehenden Ansprüche, **dadurch gekennzeichnet, dass** der Gassack (12) ein Vorhanggassack, insbesondere ein Vorhang-Seitengassack ist.

## Claims

1. An airbag module for an automotive vehicle, comprising
a folded inflatable airbag (12) which at an airbag edge (24) includes a mounting tab (26) for fastening the airbag (12) to the automotive vehicle, and
a flexible mounting envelope (14) in which the folded airbag (12) is received and fixed,
the mounting envelope (14) being a mounting tube elongated along a longitudinal axis (A) having a circumferential panel (38) and having a slit (30) through which the mounting tab (26) of the airbag (12) extends to the outside of the mounting envelope (14),
**characterized in that** the slit (30) defines at least one envelope tab (40) that is foldable in the radial direction, the slit (30) being configured to be curved and/or has at least two linear slit portions (32, 34, 36) inclined toward each other which are merging, and
wherein a connecting means (42) for fastening the airbag (12) to the automotive vehicle is provided, the connecting means (42) extending both through an opening (44) in the envelope tab (40) and through an opening (46) in the mounting tab (26).

2. The airbag module according to claim 1, **characterized in that**, in a condition of the airbag module (10) mounted on the automotive vehicle, the envelope tab (40) of the mounting envelope (14) extends substantially in parallel to the mounting tab (26) of the airbag (12).

3. The airbag module according to claim 1 or 2, **characterized in that**, in a condition of the airbag module (10) mounted on the automotive vehicle, the envelope tab (40) of the mounting envelope (14) is in contact with the mounting tab (26) of the airbag (12), especially abuts on the surface of the mounting tab (26) of the airbag (12).

4. The airbag module according to any one of the preceding claims, **characterized in that** the connecting means (42) is a snap-on clip.

5. The airbag module according to any one of the preceding claims, **characterized in that** the slit (30) is U-shaped or V-shaped.

6. The airbag module according to any one of the preceding claims, **characterized in that** the mounting envelope (14) is made from tearable material and/or includes predetermined breaking points so that the mounting envelope (14) provides a mounting fixation and will tear upon deployment of the airbag (12).

7. The airbag module according to any one of the preceding claims, **characterized in that** the airbag (12) is a curtain airbag, especially a side curtain airbag.

## Revendications

1. Module airbag pour un véhicule automobile, comprenant
un coussin gonflable (12) plié, qui présente sur un bord (24) du coussin gonflable une patte de montage (26) pour la fixation du coussin gonflable (12) sur le véhicule automobile, et
une enveloppe de montage (14) flexible, dans laquelle le coussin gonflable (12) plié est reçu et fixé,
pour lequel l'enveloppe de montage (14) est un tuyau de montage allongé le long d'un axe longitudinal (A) avec une paroi périphérique (38) s'étendant dans le sens périphérique et qui présente une fente (30), à travers laquelle la patte de montage (26) du coussin gonflable (12) s'étend vers l'extérieur de l'enveloppe de montage (14),
**caractérisé en ce que** la fente (30) définit au moins une patte d'enveloppe (40) qui peut être rabattue dans la direction radiale, pour lequel la fente (30) est réalisée de manière incurvée et/ou présente au moins deux sections de fente (32, 34, 36) linéaires, inclinées l'une par rapport à l'autre, qui se rejoignent, et
pour lequel un moyen de liaison (42) est prévu pour la fixation du coussin gonflable (12) sur le véhicule automobile, pour lequel le moyen de liaison (42) s'étend aussi bien à travers une ouverture (44) dans la patte d'enveloppe (40) qu'à travers une ouverture (46) dans la patte de montage (26).

2. Module airbag selon la revendication 1, **caractérisé en ce que** la patte (40) de l'enveloppe de montage (14) s'étend sensiblement parallèlement à la patte de montage (26) du coussin gonflable (12) dans un état monté du module airbag (10) sur le véhicule automobile.

3. Module airbag selon la revendication 1 ou 2, **caractérisé en ce que** la patte (40) de l'enveloppe de montage (14) est en contact avec la patte de montage (26) du coussin gonflable (12) dans un état du module airbag (10) monté sur le véhicule automobile, et s'applique en particulier à plat contre la patte de montage (26) du coussin gonflable (12).

4. Module airbag selon l'une des revendications précédentes, **caractérisé en ce que** le moyen de liaison (42) est un clip d'encliquetage.

5. Module airbag selon l'une des revendications précédentes, **caractérisé en ce que** la fente (30) a la forme d'un U ou d'un V.

6. Module airbag selon l'une des revendications précédentes, **caractérisé en ce que** l'enveloppe de montage (14) est fabriquée dans un matériau déchirable et/ou présente des points destinés à la rupture, de sorte que l'enveloppe de montage (14) fournit une fixation de montage et se déchire lors d'un déploiement du coussin gonflable (12).

7. Module airbag selon l'une des revendications précédentes, **caractérisé en ce que** le coussin gonflable (12) est un airbag rideau, en particulier un airbag latéral rideau.
